# EUROPEAN PATENT APPLICATION

(11) **EP 4 213 118 A1**
(43) Date of publication of application: **19.07.2023**
(21) Application number: 23151156.9
(22) Date of filing: 11.01.2023
(51) Int. Cl.: G07F 17/32, G06K 19/04, G06K 19/077, H04W 4/80

(54) **MANAGEMENT SYSTEM AND GAMING CURRENCY**

(30) Priority: 13.01.2022 JP 2022003598
(71) Applicant: ANGEL GROUP CO., LTD., Higashiomi-shi Shiga 527-0232 (JP)
(72) Inventor: SHIGETA, Yasushi, Shiga, 527-0232 (JP)
(74) Representative: Bardehle Pagenberg Partnerschaft mbB Patentanwälte Rechtsanwälte

(57) **Abstract**

The object of the present invention is providing a management system configured to manage a gaming currency using an EM wire member and a RFID part.

A management system (40) is a management system configured to manage a gaming currency (100) to be used for betting in a game in a casino and has a configuration wherein the gaming currency (100) includes a built-in EM wire member (131) and a built-in RFID part (141) configured to store information, the management system (40) comprises: a gate (41) including an EM detecting system (42) configured to detect presence of the gaming currency (100) possessed by a passing person passing therethrough by detecting presence of the EM wire member (131); and an RFID reading system (47) configured to read the information from the RFID part (141), and the RFID reading system (47) is configured to: read the information from the RFID part (141) of the gaming currency (100) declared by the passing person; or read the information from the RFID part (141) of the gaming currency (100) detected by detecting the EM wire member (131) by the EM detecting system (42).

## Description

### TECHINICAL FIELD

The present invention relates to a management system to configured to manage a gaming currency used for betting in a game at a casino, and a gaming currency.

### BACKGROUND

In a casino facility, games are performed using gaming currencies. In the casino facility, the gaming currency is valuable exchangeable for cash, a high level of security management is required, and it is necessary to prevent an illicit activity of counterfeiting, money laundering and the like. The gaming currency including a built-in RFID part is used for managing the gaming currency. It is possible to perform authenticity judgement, tracking and the like of the gaming currency in the casino facility by building the RFID part in the gaming currency and reading the RFID part at a game table, a cashier and the like.

Stable reading of the RFID part built in the gaming currency is always problem. When a radio wave is not transmitted well to and from an RFID reader, the RFID part may not be read accurately. Moreover, the RFID part built in the gaming currency may fail, and, in this case, the RFID reader cannot read the RFID part.

On the other hand, there is a situation where advanced management using an RFID tag is not necessary, but more stable detection of the gaming currency is desired. For example, in the case where bringing-out of the gaming currency from the gaming floor of the gaming facility is prohibited, it is desirable to detect in a non-contact manner the gaming currency tried to be brought out by a player at a gate. There is also a case where bringing-out of the gaming currency from the gaming floor is permitted on condition of a declaration. In this case, it is also desirable to detect in the non-contact manner the gaming currency tried to be brought out by a player without the declaration.

U.S. Patent No.9183479 discloses a gaming chip wherein a microchip is built in and an EM material of a coil, a metal foil and the like is built in in order to prevent an employee from trying to take out a valuable token from the gaming floor illicitly.

### SUMMARY OF THE INVENTION

However, it is not described in U.S. Patent No.9183479 how to use an EM signal from the EM material and an RFID signal from the IC chip to manage the gaming chip. In addition, in the gaming chip in U.S. Patent No.9183479, it is described that the size of an EM coil is necessary to be the same as or larger than an antenna in order to avoid interference between the EM signal and the RFID signal. Thus, in the U.S. Patent No.9183479, the size and the arrangement of the EM coil and the antenna are limited.

Therefore, the object of the present invention is to provide a management system configured to manage a gaming currency using an EM wire member and an RFID part, and a gaming currency wherein an EM wire member is detectable and an RFID part is readable.

A management system according to an aspect of the present invention is a management system configured to manage a gaming currency to be used for betting in a game in a casino and has a configuration wherein the gaming currency includes a built-in EM wire member and a built-in RFID part configured to store information, the management system comprises: a gate including an EM detecting system configured to detect presence of the gaming currency possessed by a passing person passing therethrough by detecting presence of the EM wire member; and an RFID reading system configured to read the information from the RFID part, and the RFID reading system is configured to: read the information from the RFID part of the gaming currency declared by the passing person; or read the information from the RFID part of the gaming currency detected by detecting the EM wire member by the EM detecting system.

By this configuration, it is possible to detect or inspect the gaming currency of a player passing through the gate using the EM wire member and the RFID part built in the gaming currency.

The above management system may be a system configured to manage the gaming currency permitted to be brought out to outside of the gate or brought in to inside of the gate on condition of a declaration, the RFID reading system may be configured to read the information from the RFID part of the gaming currency declared by the passing person, and the management system may further comprise a registering device configured to store in a database the information of the gaming currency read by the RFID reading system as information on the gaming currency related to bringing-out or bringing-in.

By this configuration, it is possible to manage the gaming currency effectively in the case where the gaming currency is permitted to be brought out to the outside of the gate and brought in to the inside of the gate on condition of a declaration.

In the above management system, the RFID reading system may be configured to read the information from the RFID part of the gaming currency to be brought in to the inside of the gate, the registering device may be configured to store in the database the information of the gaming currency to be brought out to the outside of the gate by the passing person as the information of the gaming currency related to the bringing-out, and the management system may further comprise an inspecting device configured to inspect whether the information of the gaming currency to be brought in to the inside of the gate by the passing person and read by the RFID reading system is stored in the database as the information of the gaming currency related the bringing-out.

By this configuration, it is possible to check whether the gaming currency to be brought in to the inside of the gate is that which was brought out to the outside of the gate through the legitimate procedure.

The above management system may be a system configured to manage the gaming currency prohibited from being brought out to outside of the gate or brought in to inside of the gate, the RFID reading system may be configured to read the information from the RFID part of the gaming currency detected by detecting the EM wire member by the EM detecting system, and the management system may further comprise an inspecting device configured to inspect whether the information of the gaming currency read by the RFID reading system is stored in the database.

By this configuration, in the case where the gaming currency is prohibited to be brought out to the outside of the gate and brought in to the inside of the gate, it is possible to check whether it is a legitimate gaming currency with respect to the gaming currency brought out or brought in against such prohibition.

In the above management system, the gate may be a player gate on a casino gaming floor in the casino, a staff gate in a casino security area in the casino, or a staff gate in a manufacturing facility which manufactures the gaming currency.

A gaming currency according to another aspect of the present invention is a gaming currency comprising: a first capsule member made of resin; a second capsule member made of resin; an EM wire member; an RFID part; a first decal made of resin; a second decal made of resin; and a peripheral portion made of resin, and has a configuration wherein the first capsule member and the second capsule member are joined to form a capsule, the RFID part includes an IC chip configured to readably store information and an antenna connected to the IC chip, the peripheral portion is disposed around the periphery of the capsule, the first decal and the second decal are provided on the outside of the first capsule member and the second capsule member respectively, the RFID part is disposed within the capsule, the EM wire member is disposed between the first decal and the second decal, the EM wire member and the RFID part are disposed apart from each other in a thickness direction of the gaming currency, and presence of the gaming currency is detectable by the EM wire member and the information is readable from the RFID part.

By this configuration, since the EM wire member and the RFID part are disposed apart from each other in the thickness direction of the gaming currency, even if the EM wire member and the RFID part overlap when viewing in the thickness direction, they do not interfere or short with each other, so flexibility of a shape and arrangement of the EM wire member and the RFID part is increased, and it is possible to realize the shape and the arrangement effective in detecting and reading of the EM wire member and the RFID part.

In the above gaming currency, the EM wire member and the RFID part may be arranged to overlap each other when viewing from the thickness direction.

As described above, since the EM wire member and the RFID part are arranged apart from each other in the thickness direction of the gaming currency, even if they are arranged to overlap each other when viewing in the thickness direction as this configuration, the EM wire member and the RFID part do not interfere or short with each other, and, in the case where the EM wire member is formed in a coil-shape, it is possible to make the surface of the coil wider and make the EM wire member longer.

In the above gaming currency, the EM wire member may be disposed within the capsule.

By this configuration, the EM wire member is protected by the capsule.

In the above gaming currency, the EM wire member may be held by a first sheet-like base member to form an EM sheet, and the EM sheet may be fixed to the first capsule member or the second capsule member.

By this configuration, since the EM wire member is fixed to the capsule, the EM wire member does not hit the capsule member in the capsule to fail, and the EM wire member dose not move freely in the capsule to make a clattering noise.

In the above gaming currency, the RFID part may be held by a second sheet-like base member to form an RFID sheet, and the RFID sheet may be fixed to the first capsule member and the second capsule member.

By this configuration, since the RFID part is fixed to the capsule, the RFID part does not hit the capsule member in the capsule to fail, and the RFID part dose not move freely in the capsule to make a clattering noise.

In the above gaming currency, the EM wire member may be held by a first sheet-like base member to form an EM sheet, the RFID part may be held by a second sheet-like base member to form an RFID sheet, and the RFID sheet may include at least one adhesive surface larger than the EM sheet and may be adhered to the EM sheet and the first capsule member or the second capsule member over the EM sheet with the adhesive surface.

By this configuration, since the EM wire member and the RFID part are protected by the capsule and fixed in the capsule, the EM wire member and the RFID part do not hit the capsule member in the capsule to fail, and the EM wire member and the RFID part does not move freely in the capsule to make a clattering noise.

In the above gaming currency, the EM wire member may be made of amorphous material.

In the above gaming currency, the EM wire member may be a circular wire member of a one lap, or two or more laps with no end.

In the above gaming currency, the EM sheet may be formed, and the EM wire member may be a plurality of wire members arranged in a same direction as each other on the first sheet-like base member.

In the above gaming currency, the EM wire member may include a group of first wire members arranged in a same direction as each other on a first surface of the first sheet-like base member and a group of second wire members arranged in a direction crossing the group of first wire members on a second surface of the first sheet-like base member.

In the above gaming currency, the first decal and the second decal may be printed with casino information.

In the above gaming currency, the IC chip may be configured to store at least any one of a chip ID and denomination information of the gaming currency.

In the above gaming currency, the EM wire member and the RFID part may be built in the capsule in a non-contact state.

By this configuration, the EM wire member and the RFID part are protected by the capsule, and interference or short due to contact between the EM wire member and the RFID part do not occur.

### BRIEF DESCRIPTION OF DRAWINGS

FIG.1 is a cross-sectional view showing a gaming currency according to an embodiment of the present invention.
FIG.2 is a plan view showing configuration of an EM sheet according to the embodiment of the present invention.
FIG.3 is a plan view showing configuration of an RFID sheet according to the embodiment of the present invention.
Fig.4 is a perspective view showing the gaming currency according to the embodiment of the present invention.
FIG.5 is a view showing configuration of a detecting system according to the embodiment of the present invention.
Fig.6 is a view showing data to be stored in a database according to the embodiment of the present invention.
FIG.7 is a cross-sectional view showing a variant example of the gaming currency according to the embodiment of the present invention.
Fig.8 is a plan view showing a variant example of the EM sheet according to the embodiment of the present invention.

### DESCRIPTION OF THE PREFERRED EMBODIMENTS

In the following, an embodiment of the present invention well be described giving examples. The following description is merely an example of the embodiment of the present invention and not intended to limit scope of protection of the present invention.

### (Configuration of gaming currency)

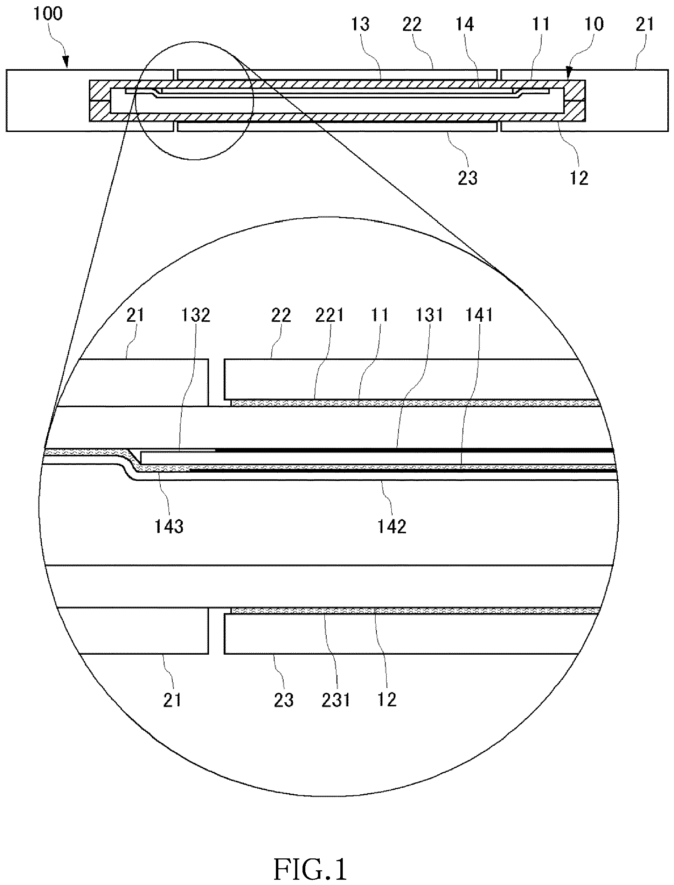

FIG.1 is a cross-sectional view showing a gaming currency according to an embodiment of the present invention. The gaming currency 100 is disc-shaped. The gaming currency 100 includes a first capsule member 11, a second capsule member 12, an EM sheet 13, an RFID sheet 14, a first decal 22, a second decal 23, and a peripheral portion 21. The gaming currency 100 has a cross-sectional configuration in which the first decal 22, the first capsule member 11, the EM sheet 13, the RFID sheet 14, the second capsule member 12, and the second decal 23 are stacked in this order. The gaming currency 100 is not limited to a disc shape, but may be a rectangular plate shape or any other shape.

The first capsule member 11 and the second capsule member 12 are joined to each other, and the first capsule member 11 and the second capsule member 12 form a capsule 10. The first capsule member 11 and the second capsule member 12 have the same shape as each other, and have a tray shape with a flange on the edge. The flange of the first capsule member 11 and the flange of the second capsule member 12 are glued to each other by an adhesive to form the capsule 10 including a sealed space inside. The first capsule member 11 and the second capsule member 12 may be joined to each other by engagement, welding, press-fitting, locking, or other manners.

The EM sheet 13 includes a first sheet-like base member 132 formed of a plastic sheet as an insulator and an amorphous wire member 131 as an EM wire member provided on the first sheet-like base member 132. The amorphous wire member 131 is fixed to the first sheet-like base member 132 by adhesion. The EM sheet 13 is fixed to the inner surface of the first capsule member 11 in the direction such that the amorphous wire member 131 faces outward. Thereby, the EM sheet 13 is disposed in the inner space of the capsule 10.

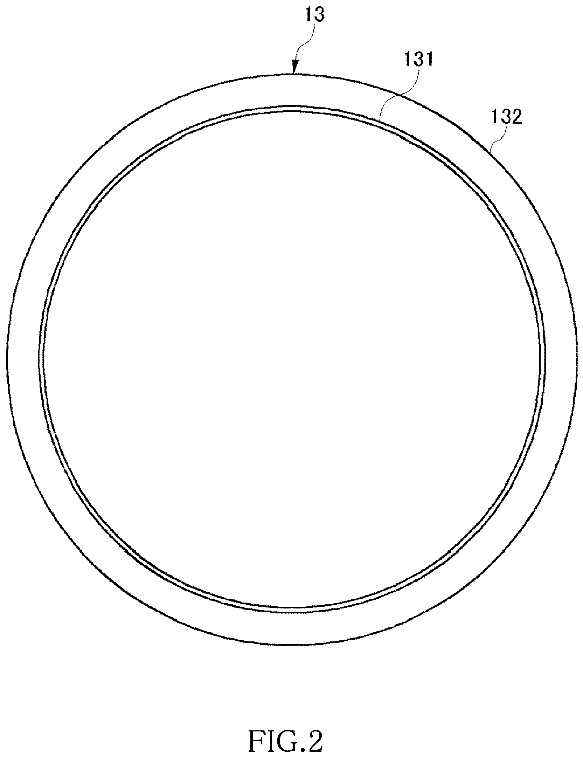

FIG.2 is a plan view showing configuration of the EM sheet according to the embodiment of the present invention. The EM sheet 13 has the configuration in which the amorphous wire member 131 is formed in a circle smaller than the circular first sheet base member 132 and disposed on the first sheet base member 132. The amorphous wire member 131 is a coil-shaped wire member formed in a coil-shape of about 1 to 4 laps.

Returning to FIG.1, the RFID sheet 14 includes a second sheet-like base member 142, an RFID part 141 provided at the second sheet-like base member 142, and an adhesive layer 143 provided on the RFID part 141. The RFID part 141 is adhered to the second sheet-like base member 142 by the adhesive layer 143.

The RFID sheet 14 has a larger diameter than the EM sheet 13 and is adhered to the inner surface of the first capsule member 11 in the direction such that the surface with the adhesive layer 143 faces outward, that is, faces the EM sheet 13. Thereby, the EM sheet 13 is fixed to the inner surface of the first capsule member 11 by the RFID sheet 14. The adhesive layer 143 of the RFID sheet 14 adheres to the inner surface of the first capsule member 11 with the peripheral portion protruding from the EM sheet 13. Thereby, the EM sheet 13 and the RFID sheet 14 are disposed in a fixed state in the inner space of the capsule 10.

As described above, since the EM sheet 13 is fixed to the inner surface of the first capsule member 11 and the RFID sheet 14 is also fixed to the inner surface of the first capsule member 11, both the EM sheet 13 and the RFID sheet 14 are contained within the capsule 10. At this case, since at least the first sheet-like base member 132 of the EM sheet 13 is interposed between the EM sheet 13 and the RFID sheet 14, the amorphous wire member 131 and the RFID part 141 do not contact each other and are accommodated within the capsule 10 apart from each other at a distance in the thickness direction of the gaming currency 100.

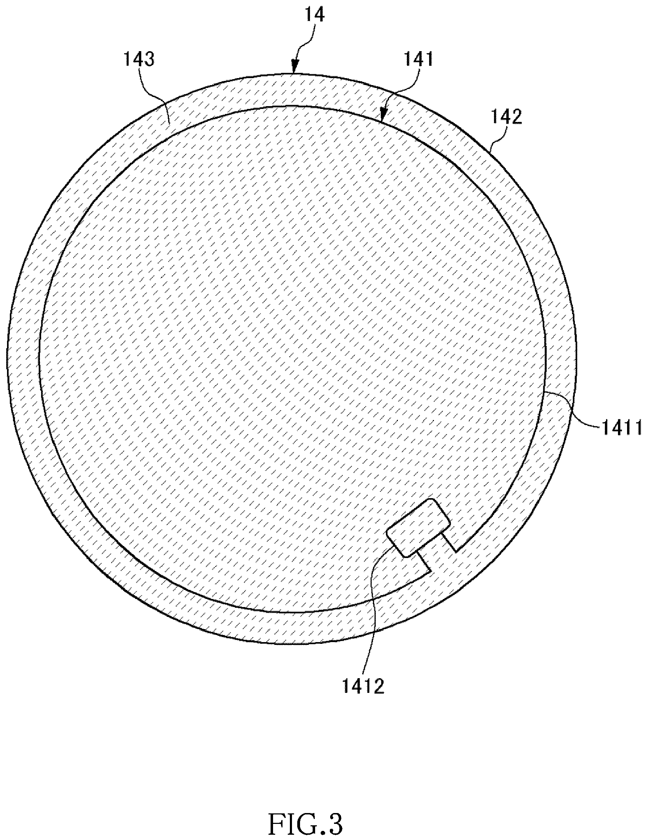

FIG.3 is a plan view showing configuration of the RFID sheet according to the embodiment of the present invention. In the RFID sheet 14, the RFID part 141 is disposed on the circular second sheet-like base member 142, and an adhesive layer 143 is provided on the RFID part 141 over the entire surface of the second sheet-like base member 142. The RFID part 141 includes an antenna 1411 formed in a circle smaller than the second sheet-like base member 142 and an IC chip 1412 connected to the antenna 1411. The IC chip 1412 includes a rectifier circuit, a control portion, and a memory. The RFID part 141 is sandwiched between the second sheet-like base member 142 and the adhesive layer 143 to be fixed to the second sheet-like base member 142.

The memory of the IC chip 1412 stores information on a casino facility in which the gaming currency is to be used, information on value (denomination) of the gaming currency (e.g., $10, $100, $1000, etc.), information on chip ID uniquely identifying the gaming currency, and manufacturing information of the gaming currency (e.g., date of manufacture, a manufacturing factory, etc.).

Returning to FIG.1, the peripheral portion 21 is provided so as to enclose the entire periphery of the capsule 10 at the periphery of the capsule 10 in which the EM sheet 13 and RFID sheet 14 are built. The periphery portion 21 is made of resin, for example. The center portions of the top and bottom surfaces of the capsule 10 are exposed from the doughnut-shaped peripheral portion 21. The first decal 22 and the second decal 23 are glued to this exposed center portions of the top and bottom surfaces of the capsule 10, respectively. The first decal 22 is fixed to the outer surface of the first capsule member 11 by adhesive 221, and the second decal 23 is fixed to the outer surface of the second capsule member 12 by adhesive 231.

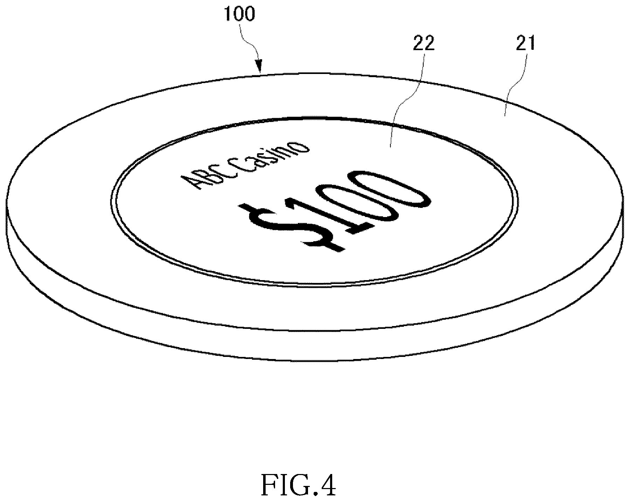

FIG.4 is a perspective view showing the gaming currency according to the embodiment of the present invention. The first and second decals 22 and 23 are printed with information on a value (denomination) of the gaming currency 100 ("$100" in the example in FIG.4) and information on a casino facility in which the gaming currency 100 is to be used ("ABC Casino" in the example in FIG.4), respectively.

### (Configuration of detecting system)

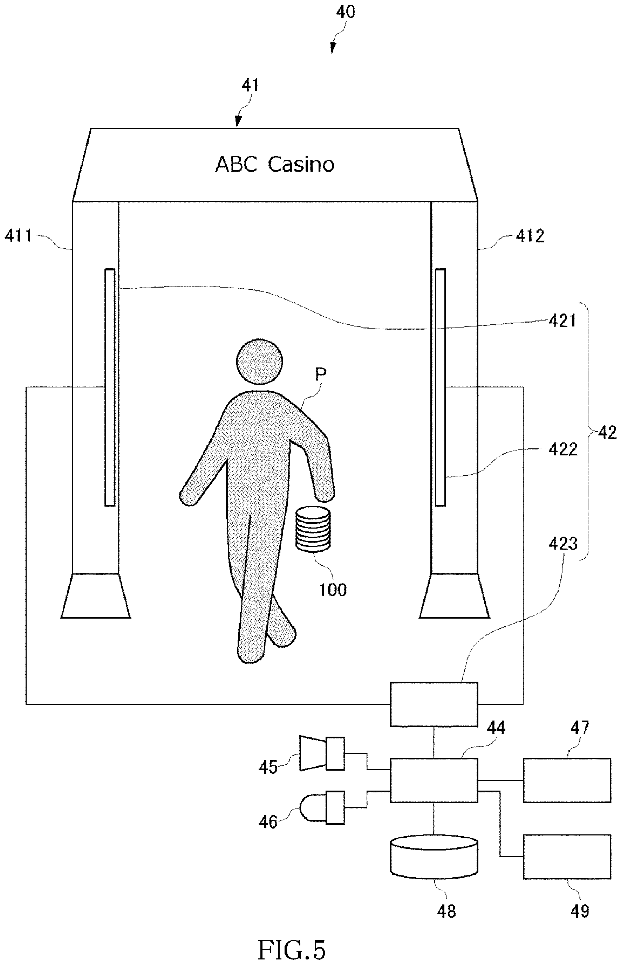

FIG.5 is a view showing configuration of a detecting system according to the embodiment of the present invention. In the example of Fig.5, the management system 40 is provided at an entrance and exit for player on a gaming floor of a casino facility. The management system 40 includes a security gate 41 for player. The security gate 41 includes left and right pillars 411 and 412. A transmitting antenna 421 and a receiving antenna 422 are built in the left and right pillars 411 and 412, respectively.

The transmitting antenna 421 and the receiving antenna 422 are connected to the detecting device 423, respectively. The transmitting antenna 421, the receiving antenna 422, and the detecting device 423 form an EM detecting system 42 configured to detect presence of the amorphous wire member 131. A control device 44 is connected to the detecting device 423. The transmitting antenna 421 generates a magnetic field towards the receiving antenna 422.

When the amorphous wire member 131 is present between the transmitting antenna 421 and the receiving antenna 422, distortion is generated in the magnetic field generated by the transmitting antenna 421, and distortion is generated in the magnetic field received by the receiving antenna 422. The detecting device 423 detects this distortion of the received magnetic field and reports to the control device 44. The control device 44 detects that the gaming currency 100 including the built-in amorphous wire member 131 is presented at the security gate 41 in response to receiving the report from the detecting device 423.

The RFID reading system 47 includes an antenna and RFID reader not shown. When the gaming currency 100 is placed within a reading area of the antenna, the RFID reading system 47 reads the information from the RFID part 141 built in the gaming currency 100. The RFID reading system 47 is installed near the security gate 41. The RFID reading system 47 does not need to read the information from the RFID part 141 of the gaming currency 100 possessed by a player passing through the security gate 41, but can read the information from the RFID part 141 of the gaming currency 100 offered by the player P before and after passing through the security gate 41 and placed within the reading area of the antenna.

A buzzer device 45 and a lamp device 46 are connected to the control device 44. When the presence of the gaming currency 100 is detected in the EM detecting system 42, the control device 44 controls the buzzer device 45 to output a buzzing sound and the lamp device 46 to turn on the lamp.

A database 48 is further connected to the control device 44. The control device 44 functions as a registering device configured to write information to the database 48 to update the database 48, and also functions as an inspecting device to inspect the gaming currency 100 with reference to information stored in the database 48. The database 48 stores data related to the gaming currency 100.

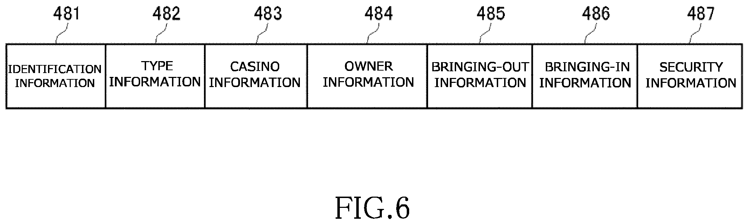

FIG.6 is a view showing data stored in the database. As shown in FIG.6, the database 48 stores, for each gaming currency 100, identification information 481 of chip ID and the like of the gaming currency, type (denomination) information 482, casino information 483 which is information on a casino where the gaming currency is to be used, owner information 484, bringing-out information 485, bringing-in information 486, security information 487.

The owner information 484 is updated at each time when the owner of the gaming currency 100 is changed. For example, when a player P purchases a gaming currency 100, the owner information 484 of the gaming currency 100 is updated to a player ID of the player P who purchases the gaming currency 100, and when the gaming currency 100 is bet on a game by a player and lost, and collected by a dealer, the owner information 484 is updated to information indicating that it is owned by a casino. When a player P participates in and win the game and a gaming currency 100 possessed by a casino is paid out to the player P who wins the game, the owner information 484 of the gaming currency 100 is updated to a player ID of the player P who wins the game.

The bringing-out information 485 is information used in the case where the gaming currency 100 is permitted to be brought out to the outside of the gaming floor from the security gate 41. The bringing-out information 485 may include date and time related to bringing-out, information on the security gate 41 from which it is brought out, information on a player ID and the like of a player P bringing out it. The bringing-into information 486 is information used in the case where the gaming currency 100 is permitted to be brought in to the inside of the gaming floor from the security gate 41. The bringing-into information 486 may include date and time related to bringing-into, information on the security gate 41 from which it is brought in, and information on a player ID and the like of a player P bringing into it.

The security information 487 is information for security management of the gaming currency 100. Security status of the gaming currency 100 is stored as security information 487. The security statuses include "usable" indicating that it is permitted to be used on the gaming floor without any problems, "suspect" indicating that it is suspected of being illicit or failure, "unusable" indicating that it is prohibited from being used on the gaming floor, and "during bringing-out" indicating that it is in the state of being brought out to the outside of the gaming floor.

A player identifying system 49 is further connected to the control device 44. The player identifying system 49 identifies a player P passing through the security gate 41. The player identifying system 49 may identify a player P by reading a member card held by the player P. The player identifying system 49 may be a system configured to identify a player P by image recognition using a camera and an image recognizing device. In this case, the camera images the face of a player P passing through the security gate 41, and the image recognizing device performs facial recognition. The player identifying system 49 identifies the player P with a player ID and outputs the player ID to the control device 44 as the result of the identification.

Operation of the management system 40 configured as described above will now be described. In the following, the operation of management system 40 is divided into the operation of management system 40 in the case where bringing-out of the gaming currency 100 from the gaming floor and bringing-in of the gaming currency 100 to the gaming floor are prohibited and the operation of management system 40 in the case where bringing-out of the gaming currency 100 from the gaming floor and bringing-in of the gaming currency 100 to the gaming floor are permitted, and it is described respectively.

### <Case where bringing-out and bringing-in of gaming currency is prohibited>

In the case where player P is prohibited from bringing out the gaming currency 100 from the gaming floor, the gaming currency 100 which a player P tries to bring out from the gaming floor is detected using the management system 40 with respect to a player P who passes through the security gate 41 to exit from the gaming floor.

A security staff is stationed near the security gate 41. The player identifying system 49 identifies a player P passing through the security gate 41. In the case where the player identifying system 49 is the system that identifies a player by a member card held by the player P, the security staff receives the member card from the player P trying to pass through the security gate 41 and identifies a player ID of the player P using the player identifying system 49.

On the other hand, in the case where the player identifying system 49 is the system that identifies a player ID of a player P by the face recognition using the camera and the image recognizing device, the camera images the face of a player P passing through the security gate 41, and the image recognizing device performs the facial recognition on the face image of the player P passing through the security gate 41.

If a player P passing through the security gate 41 possesses a gaming currency 100, the management system 40 detects the gaming currency 100, and the buzzer device 45 emits a buzzing sound and the lamp device 46 lights up. When checking the buzzing sound of the buzzer device 45 or the lighting-up of the lamp device 46, the security staff stops the player P trying to bring out the gaming currency 100 and urges the player P to cash the possessed gaming currency 100. At this time, the security staff places the gaming currency 100 tried to be brought out by the player P in the reading area of the RFID reading system 47 and reads the RFID part 141.

When there is a plurality of gaming currencies 100, the RFID reading system 47 reads the RFID parts 141 of the plurality of gaming currencies 100 simultaneously. As described above, the IC chip 1412 of the RFID part 141 stores the chip ID of the gaming currency 100. The control device 44 inspects the data of the gaming currency 100 corresponding to the chip ID read by the RFID reading system 47 with reference to the database 48, as the inspecting device.

The control device 44 as the inspecting device inspects whether the gaming currency 100 corresponding to the chip ID read by the RFID reading system 47 is the gaming currency 100 that should be in the gaming floor in the inside of the security gate 41. Specifically, the control device 44 first judges whether the chip ID read by the RFID reading system 47 is stored in the database 48. When the chip ID is stored in the database 48, the control device 44 as the inspecting device inspects whether or not the security status of the gaming currency 100 is "usable".

The control device 44 also judges whether or not the player identified by the player identifying system 49 matches the owner information associated with the chip ID read from the RFID part 141 by the RFID reading system 47 in the database 48. That is, the control device 44 judges whether the person actually possessing the gaming currency 100 is the player P stored as the owner in the database 48.

When the player identified by the player identifying system 49 matches the owner information stored in the database and the security status referenced by the control device 44 is "usable", the security staff urges the player P to cash at a cash exchange. The security staff judges that there is an illicitness when the player identified by the player identifying system 49 do not match the owner information stored in the database 48 or when the security status is not "usable".

A display device not shown is connected to the control device 44. The control device 44 performs the inspection of checking whether the chip ID is stored in the database 48, whether the security status is "usable", and whether the player matches, and displays the results of the inspection on the display device. The security staff checks the display on the display device and takes appropriate corrective action when the chip ID is not stored in the database 48, the security status is not "usable", and the player does not match.

In the case where player P is prohibited from bringing out the gaming currency 100 from the gaming floor, the player P is also prohibited from bringing in the gaming currency 100 to the inside of the gaming floor from the outside of the gaming floor. Therefore, the gaming currency 100 tried to be brought in to the inside of the gaming floor by a player P is also detected using the control system 40 with respect to a player P who enters the gaming floor through security gate 41, the control device 44 inspects the detected gaming currency 100 as the inspection device in the similar manner to the above when the gaming currency 100 is detected.

### <Case where bringing-out and bringing-in of gaming currency is permitted in condition of declaration>

A player P who exits from the gaming floor to the outside of the gaming floor declares the gaming currency 100 tried to be brought out in front of the security gate 41, and the RFID reading system 47 reads the gaming currency 100. The player P passes through the security gate 41 in the state of not holding the gaming currency 100. The player P who passed through the security gate 41 can exit from the gaming floor with holding the gaming currency 100 read by the RFID reading system 47.

The RFID reading system 47 reads the chip ID stored in the memory from the RFID sheet 14 of the gaming currency 100 related to the bringing-out. When there is a plurality of gaming currencies 100, the RFID reading system 47 reads them simultaneously and obtain a plurality of chip IDs. The RFID reading system 47 outputs the read chip IDs to the control device 44. The control device 44 stores in the database 48 the information on the gaming currencies 100 related to the bringing-out, as the registering device.

If a player P passes through the security gate 41 without offering all of the gaming currencies 100, the EM detecting system 42 detects the gaming currency 100, so the buzzer device 45 emits a buzzing sound and the lamp device 46 lights up. When confirming the buzzer sound of the buzzer device 45 and the lighting-up of the lamp device 46, a security staff stops the player P trying to bring out the gaming currency 100 and urges to offer the possessed gaming currency 100, and performs the RFID reading with the RFID reading system 47 with respect to the gaming currency 100 offered by the player P.

As described above, the management system 40 reads the RFID part 141 of the declared gaming currency 100 with the RFID reading system 47, and also detects undeclared gaming currency 100 at the security gate 41 and reads the RFID part 141 thereof with the RFID reading system 47, thereby allowing to perform registration as described below with respect to the bringing-out gaming currency 100.

The player identifying system 49 identifies the player P trying to bring out the gaming currency 100. The control device 44 judges whether or not the owner information 484 matches the player identified by the player identifying system 49 with reference to the database 48 with respect to the read chip ID.

Moreover, the control device 44 inspects whether the chip ID is stored in the database 48 with reference to the database 48 with respect to the read chip ID. When the chip ID is stored in the database 48, it further checks whether the security status associated with that chip ID is "usable".

The control device 44 further judges whether or not the gaming currency 100 is surely in a state of being on the gaming floor with reference to the bringing-out information 485 and the bringing-in information 486 in the database 48 with respect to the chip ID read by the RFID reading system 47. That is, when no bringing-out information 485 is recorded, or when a previous bringing-out information 485 is recorded but a later bringing-in information 486 is recorded, the control device 44 judges that it is the gaming currency 100 that should be present on the gaming floor and permits the gaming currency 100 to be brought out from the gaming floor.

On the other hand, when a previous bringing-out information 485 is recorded, but no later bringing-in information 486 is recorded, the control device 44 judges that the gaming currency 100 is not brought in through a legitimate declaration and prohibits the bringing-out of this gaming currency 100 from the gaming floor.

When the player matches and the security status is "usable", the control device 44 updates the bringing-out information 485 in the database 48 with respect to the gaming currency 100, as the registering device. Specifically, the control device 44 records in the database 48 a date and time related to the bringing-out, information on the security gate 41, and the player ID of the player P bringing out as the bringing-out information 485. In addition, the control device 44 updates the security status to "during bringing-out" .

Although, in the present embodiment, as shown in Fig. 6, the bringing-out information 485 is included in the data of each gaming currency 100 in the database 48, and the bringing-out information 485 is updated and the security status is updated to "during bringing-out" when the gaming currency 100 is brought out, in addition to or instead of this, the control device 44 may store in the database 48 the player ID of the player P identified by the player identifying system 49 and the chip ID of the gaming currency 100 obtained from the RFID reading system 47 in association with each other.

In the case where the gaming currency 100 is permitted to be brought out from the gaming floor on the condition of the declaration, the gaming currency 100 is also permitted to be brought in to the gaming floor. A player P offers a game currency 100 tried to be brought in by the player P before passing through the security gate 41 when bringing in the game currency 100 to the gaming floor. The RFID reading system 47 reads the offered gaming currency 100. The player identifying system 49 identifies the player P entering the gaming floor.

The control device 44 judges whether or not the gaming currency 100 is surely in a state of during bringing-out with reference to the bringing-out information 485 and the bringing-in information 486 in the database 48 with respect to the chip ID read by the RFID reading system 47. That is, the control device 44 judges that the gaming currency 100 is that which was brought out through the legitimate declaration when a bringing-out information 485 is recorded but no bringing-in information 486 is recorded, or when a previous bringing-in information 486 is recorded but a later bringing-out information 485 is recorded, and permits the gaming currency 100 to be brought in to the gaming floor.

On the other hand, the control device 44 judges that the gaming currency 100 is not that which is brought out through a legitimate declaration when no bringing-out information 485 is recorded or when a previous bringing-out information 485 is recorded but a later bringing-in information 486 is recorded, and prohibits the gaming currency 100 from being brought in to the gaming floor.

The control device 44 also checks whether the security status associated with the chip ID read by the RFID reading system 47 as security information 487 is "during bringing-out". The control device 44 judges that the gaming currency 100 is not that which was brought out through a legitimate declaration when the security status is not "during bringing-out", and prohibits the gaming currency 100 from being brought in to the gaming floor.

The control device 44 further checks whether or not the player ID of the player P identified by the player identifying system 49 matches the player ID associated as the owner information 484 with the chip ID read by the RFID reading system 47 in the database 48. The control device 44 prohibits the gaming currency 100 from being brought in to the gaming floor when the player ID identified by the player identifying system 49 does not match the player ID stored in the database 48.

The control device 44 permits the gaming currency 100 to be brought in to the gaming floor when judging that the inspected gaming currency 100 is that which was brought out through the legitimate declaration and the player ID identified by the player identifying system 49 matches the player ID stored as the owner of the gaming currency 100 in the database 48. A display device not shown is connected to the control device 44. The control device 44 displays the result of this permission or prohibition judgment on the display device.

Thereby, in the case where the bringing-in and bringing out of the gaming currency 100 to and from the gaming floor is permitted on the condition of the declaration, it is possible to manage such bringing-in and bringing out of the gaming currency 100.

As described above, in the embodiment, it is possible not only to detect that the person passing through the security gate 41 possesses the gaming currency 100 using the management system 40 at the security gate 41, but also to inspect the gaming currency 100 by reading the RFID part 141 of the gaming currency 100 tried to be brought out or brought in illicitly. Moreover, in the case where the bringing-in is permitted, it is possible to perform the procedure for the bringing-in using the RFID reading system 47, and prevent the gaming currency 100 from being brought out without through the legitimate procedure using the EM detecting system 42. In addition, in the case where the bringing-in is permitted, it is possible to perform the procedure for the bringing-in using the RFID reading system 47, and prevent the gaming currency 100 from being brought in without through the legitimate procedure using the EM detecting system 42.

In addition, for the gaming currency 100, since the insulating first sheet-like base member 132 is interposed between the amorphous wire material 131, and the RFID part 141 and the amorphous wire material 131 and the RFID part 141 are disposed apart from each other in the thickness direction of the gaming currency 100, the amorphous wire member 131 and the RFID part 141 do not interfere or short with each other, and are allowed to overlap each other when viewing in the direction of the thickness of the gaming currency 100. That is, while preventing the interference or the short between the amorphous wire member 131 and the RFID part 141, it is possible to secure flexibility of the design of the amorphous wire member 131 and the RFID part 141.

In the above embodiment, the security gate 41 is installed at the entrance and exit of the gaming floor and detects the gaming currency 100 with respect to the player entering and exiting from the gaming floor, but a similar security gate may be installed at a staff entrance and exit for entering and exiting a security area. A similar security gate may be installed at a staff security gate for entering and exiting a manufacturing facility which manufactures the gaming currency 100. In these cases, since bringing-out of the gaming currency 100 is especially prohibited generally, only the gaming currency related to the bringing-out may be detected.

In addition, in the above embodiment, the example where the EM detecting system 42 is installed at security gate 41 is described, but management system 40 may be applied to the location other than the security gate 41. For example, the inspection may be performed using the above management system 40 with respect to a gaming currency 100 offered by a player P to a staff as a gaming currency 100 related to cashing at a cash exchange. In this case, it may be to check whether the gaming currency 100 related to the inspection is the gaming currency 100 including the built-in amorphous wire member 131 as EM wire member using the EM detecting system 42.

In addition, the EM detecting system 42 is not limited to that which is installed in the inside of the gate, the transmitting antenna 421 and the receiving antenna 422 may be built in a handy-type body scanner, for example.

In addition, in the above embodiment, the example where the player identifying system 49 is formed of the camera and the image recognizing device is described, but it may be to simply image the player's face using the camera and not identify the player ID through the image recognition. In this case, the face image may be stored in the database 48 in association with the information indicating that the gaming currency 100 is brought out.

In addition, in the above embodiment, it is explained that the gaming currency 100 has the configuration including the amorphous wire member 131 as EM wire member and the RFID part 141, but the configuration of the gaming currency 100 is not limited to the above example.

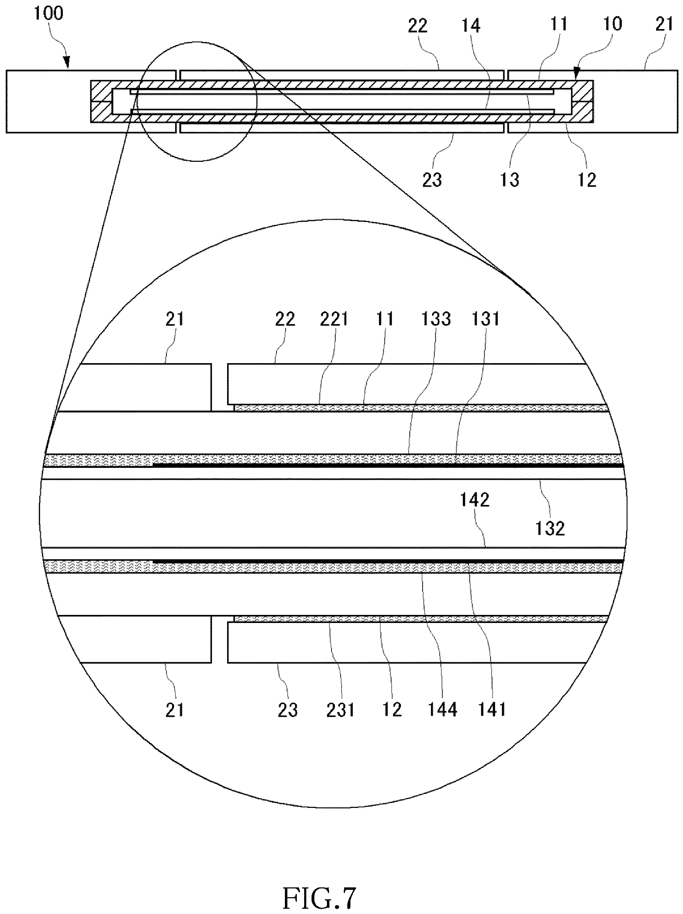

FIG.7 is a view showing a cross-sectional view of a variant example of the gaming currency according to the embodiment of the present invention. In this example, the EM sheet 13 is fixed to the first capsule member 11 and the RFID sheet 14 is fixed to the second capsule member 12.

The EM sheet 13 includes the first sheet-like base member 132, the amorphous wire member 131 at the first sheet-like base member 132, and a first adhesive layer 133 provided on the amorphous wire member 131. The amorphous wire member 131 is fixed to the first sheet-like base member 132 by the first adhesive layer 133. The EM sheet 13 is fixed to the inner surface of the first capsule member 11 by adhering the adhesive layer 133 to the inner surface of the first capsule member 11. Thereby, the EM sheet 13 is disposed in the inner space of the capsule 10.

The RFID sheet 14 includes the second sheet-like base member 142, the RFID part 141 provided at the second sheet-like base member 142, and a second adhesive layer 144 provided on the RFID part 141. The RFID sheet 14 is fixed to the inner surface of the second capsule member 12 by the second adhesive layer 144. The RFID sheet 14 is fixed to the inner surface of the second capsule member 12 by adhering the second adhesive layer 144 to the inner surface of the second capsule member 12. Thereby, the RFID sheet 14 is disposed in the inner space of the capsule 10.

Since the EM sheet 13 is fixed to the inner surface of the first capsule member 11 and the RFID sheet 14 is fixed to the inner surface of the second capsule member 12, the EM sheet 13 and the RFID sheet 14 are contained in the capsule 10, but do not contact each other and are accommodated in the inner space of the capsule 10 apart at a distance from each other.

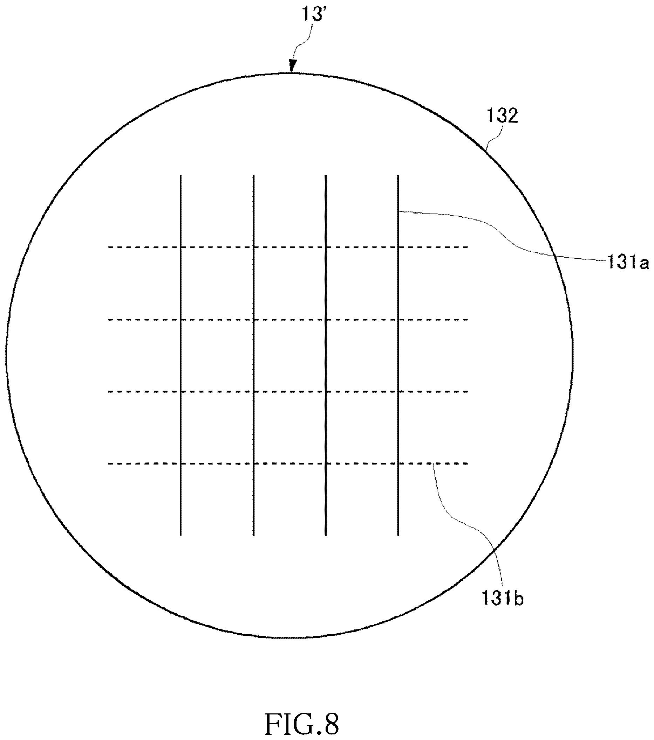

FIG.8 is a plan view showing a variant example of the EM sheet according to the embodiment of the present invention. In the EM sheet 13', a plurality of straight amorphous wire members 131a extending in parallel is arranged on the circular first sheet-like base member 132, and the first adhesive layer 133 is provided thereon. A plurality of straight amorphous wire members 131b extending in parallel is provided on the opposite surface of the first sheet-like base member 132 to the surface on which the amorphous wire members 131a are provided. The amorphous wire members 131a and the amorphous wire members 131b are arranged to be non-parallel and intersect with each other, and in this embodiment, the amorphous wire members 131a and the amorphous wire members 131b are orthogonal to each other.

As in this example, the amorphous wire members in the EM sheet 13 may not be the shape with no end as shown in FIG.2, but a plurality of straight wire members.

In addition, in the above embodiment, the EM sheet 13 is provided inside the capsule 10, but the EM sheet 13 may be provided outside the capsule 10 since it is less likely to fail than the RFID sheet 14. For example, the EM sheet 13 may be disposed between the first capsule member 11 and the first decal 22 or between the second capsule member 12 and the second decal 23. All or a part of the amorphous wire member 131 may be disposed between the capsule 10 and the peripheral portion 21.
- 100: Gaming currency
- 11: First capsule member
- 12: Second capsule member
- 13: EM sheet
- 131: Amorphous wire member
- 132: First sheet-like base member
- 14: RFID sheet
- 141: RFID part
- 1411: Antenna
- 1412: IC chip
- 142: Second sheet-like base member
- 21: Peripheral portion
- 22: First decal
- 23: Second decal
- 40: Management system
- 41: Security gate
- 42: EM Detecting system
- 421: Transmitting antenna
- 422: Receiving antenna
- 44: Control device
- 47: RFID reading system
- 48: Database
- 49: Player identifying system

## Claims

1. A management system configured to manage a gaming currency to be used for betting in a game in a casino, wherein
the gaming currency includes a built-in EM wire member and a built-in RFID part configured to store information,
the management system comprises:
a gate including an EM detecting system configured to detect presence of the gaming currency possessed by a passing person passing therethrough by detecting presence of the EM wire member; and
an RFID reading system configured to read the information from the RFID part, and
the RFID reading system is configured to:
read the information from the RFID part of the gaming currency declared by the passing person; or
read the information from the RFID part of the gaming currency detected by detecting the EM wire member by the EM detecting system.

2. The management system according to claim 1, wherein
the management system is a system configured to manage the gaming currency permitted to be brought out to outside of the gate or brought in to inside of the gate on condition of a declaration,
the RFID reading system is configured to read the information from the RFID part of the gaming currency declared by the passing person, and
the management system further comprises a registering device configured to store in a database the information of the gaming currency read by the RFID reading system as information on the gaming currency related to bringing-out or bringing-in.

3. The management system according to claim 2, wherein
the RFID reading system is configured to read the information from the RFID part of the gaming currency to be brought in to the inside of the gate,
the registering device is configured to store in the database the information of the gaming currency to be brought out to the outside of the gate by the passing person as the information of the gaming currency related to the bringing-out, and
the management system further comprises an inspecting device configured to inspect whether the information of the gaming currency to be brought in to the inside of the gate by the passing person and read by the RFID reading system is stored in the database as the information of the gaming currency related the bringing-out.

4. The management system according to claim 1, wherein
the management system is a system configured to manage the gaming currency prohibited from being brought out to outside of the gate or brought in to inside of the gate,
the RFID reading system is configured to read the information from the RFID part of the gaming currency detected by detecting the EM wire member by the EM detecting system, and
the management system further comprises an inspecting device configured to inspect whether the information of the gaming currency read by the RFID reading system is stored in the database.

5. The management system according to claim 1, wherein the gate is a player gate on a casino gaming floor in the casino, a staff gate in a casino security area in the casino, or a staff gate in a manufacturing facility which manufactures the gaming currency.

6. A gaming currency comprising: a first capsule member made of resin; a second capsule member made of resin; an EM wire member; an RFID part; a first decal made of resin; a second decal made of resin; and a peripheral portion made of resin,
the first capsule member and the second capsule member are joined to form a capsule,
the RFID part includes an IC chip configured to readably store information and an antenna connected to the IC chip,
the peripheral portion is disposed around the periphery of the capsule,
the first decal and the second decal are provided on the outside of the first capsule member and the second capsule member respectively,
the RFID part is disposed within the capsule,
the EM wire member is disposed between the first decal and the second decal,
the EM wire member and the RFID part are disposed apart from each other in a thickness direction of the gaming currency, and
presence of the gaming currency is detectable by the EM wire member and the information is readable from the RFID part.

7. The gaming currency according to claim 6, wherein the EM wire member and the RFID part are arranged to overlap each other when viewing from the thickness direction.

8. The gaming currency according to claim 6, wherein the EM wire member is disposed within the capsule.

9. The gaming currency according to claim 6, wherein
the EM wire member is held by a first sheet-like base member to form an EM sheet, and
the EM sheet is fixed to the first capsule member or the second capsule member.

10. The gaming currency according to claim 6, wherein
the RFID part is held by a second sheet-like base member to form an RFID sheet, and
the RFID sheet is fixed to the first capsule member and the second capsule member.

11. The gaming currency according to claim 6, wherein
the EM wire member is held by a first sheet-like base member to form an EM sheet,
the RFID part is held by a second sheet-like base member to form an RFID sheet, and
the RFID sheet includes at least one adhesive surface larger than the EM sheet and is adhered to the EM sheet and the first capsule member or the second capsule member over the EM sheet with the adhesive surface.

12. The gaming currency according to claim 6, wherein the EM wire member is made of amorphous material.

13. The gaming currency according to claim 6, wherein the EM wire member is a circular wire member of a one lap, or two or more laps with no end.

14. The gaming currency according to claim 9 or 11, wherein the EM sheet is formed, and the EM wire member is a plurality of wire members arranged in a same direction as each other on the first sheet-like base member.

15. The gaming currency according to claim 9 or 11, wherein the EM wire member includes a group of first wire members arranged in a same direction as each other on a first surface of the first sheet-like base member and a group of second wire members arranged in a direction crossing the group of first wire members on a second surface of the first sheet-like base member.

16. The gaming currency according to claim 6, wherein the first decal and the second decal are printed with casino information.

17. The gaming currency according to claim 6, wherein the IC chip is configured to store at least any one of a chip ID and denomination information of the gaming currency.

18. The gaming currency according to claim 6, wherein the EM wire member and the RFID part are built in the capsule in a non-contact state.
